# EUROPEAN PATENT SPECIFICATION

(11) **EP 1 617 120 B1**
(45) Date of publication and mention of the grant of the patent: **15.07.2009**
(21) Application number: 05008005.0
(22) Date of filing: 13.04.2005
(51) Int. Cl.: F16L 3/123

(54) **Retaining clip for holding heating tubes in a heated floor**
Halteclip zum Halten von Heizrohren einer Fussbodenheizung
Attache de retenue pour maintenir des tubes de chauffage au plancher

(30) Priority: 14.07.2004 GB 0415708
(43) Date of publication of application: 18.01.2006
(73) Proprietor: Yorkshire Building Services (Whitwell) Ltd, Creswell, Derbyshire S80 4AJ (GB)
(72) Inventor: Taylor, Carl Steven, Sheffield S8 0RN (GB)
(74) Representative: Lock, Howard John

(56) References cited:
- EP-A- 0 945 659
- WO-A-91/06145
- US-A- 3 584 348

## Description

### Field of the Invention

This invention relates to a flooring clip for purposes of supporting central heating or other piping beneath a floor of a dwelling, e.g. from a joist.

### Background of the Invention

In GB 2396898 is described a flooring clip comprising a saddle of inverted square "U"-shape comprising a base and a pair of parallel, spaced-apart side arms provided at a central part of the clip; integral support arms extending orthogonally from opposite sides of terminal ends of the side arms; and each support arm at a terminal end distal from the saddle being provided with a semicircular recess to received a portion of central heating, or other, circular section pipe.

In use, the clips are simply push-fitted onto the (usually clad) upper edges of joists, at suitably spaced-apart locations e.g. every 2ft or 3ft (0.6m or 1 m) along the joists, to provide adequate pipe support. The clips are then ready to receive the pipework, after which panels forming the flooring are fitted, preferably with edges of a thermal insulation membrane turned upwardly to be secured behind subsequently fitted skirting of a dwelling.

Such clips are for use with an underfloor heating system e.g. as described in GB 2370049, particularly for domestic dwellings, and have been produced as a synthetic plastics moulding and installed in systems as GB 2370049, and have proved successful in principle.

In US 3584348 is described a double ended clip for accommodating pipes etc the clip comprising a saddle of square U-shape comprising a base and a pair of spaced-apart side arms provided at a central part of the clip, with integral support arms extending from terminal ends of the side arms, each support arm being provided with an arcuate recess to engage a portion of a pipe etc.

### Object of the Invention

A basic object of the present invention is the provision of an improved flooring clip.

### Summary of the Invention

A flooring clip in accordance with the invention, is defined in Claim 1.

Various optional, or preferred, features are defined in the directly or indirectly appended sub-claims.

In use, the clips are, as with those of GB 2396898, fitted onto the (usually clad) upper edges of joists, at suitably spaced-apart locations e.g. every 2ft or 3ft (0.6m or 1 m) along the joists, to provide adequate support for the plastics piping. The clips are then ready to receive the synthetic plastics piping which is pressed, or snapped, into the semicircular recesses, after which panels forming the flooring are fitted, preferably with edges of a thermal insulation membrane around the perimeter of a room being turned upwardly to be secured behind subsequently fitted skirting of a dwelling.

### Advantages of the Invention

It follows that with the "elevated" recesses of the clips of the invention, the plastics piping is brought into close proximity with the underside of flooring, which is advantageous, particularly at levels above ground level, in improving heat transfer to the room above the flooring and hence heating efficiency. Furthermore, the arrangement may be such that the plastics piping is in contact with the underside of the flooring, with inevitable tolerance differences being accommodated by the resilience of the side arms of the metallic clip, whilst producing the latter in metal reduces production costs whilst providing a more robust clip than the plastics clip of GB 2396898.

### Preferred or Optional Features of the Invention

The clip is produced as a one-piece stamping and/or pressing from sheet metal or from metal strip.

The metal is mild steel.

The metal is galvanised mild steel.

Each side arm is connected to the base of the clip by a bend and extends at approximately 90° to the plane of the base.

Each support arm is connected to the terminal end of a side arm by a bend and extends at approximately 45° to the plane of the side arm.

The base of the clip is rectangular.

The base of the clip is provided with at least one downwardly directed tab punched out from the metal of the base, and adapted, in use, to penetrate the timber of the joist by a hammer blow on to the opposite side of the base, when fitting the clips to the joist.

Four such tabs are provided to ensure adequate retention of a clip on a joist.

The tab or tabs are pointed to assist timber penetration.

In addition, or as an alternative to the provision of tab(s), the base is provided with a through hole to receive a securing nail.

The circularity of the recess with respect to the external diameter of the plastics piping to be received therein is such that the piping is a push-fit and is effectively clipped in place by the recess, by slight deformation of the piping and/or by resilience of the recess.

Each recess has on outer, tangential extension adapted to extend to, or slightly above, the upper outer surface of the received piping.

The bend in the sheet metal between the terminal end of each side arm from its support arm is provided with a reinforcing deformation.

The bend in the sheet metal between the terminal end of each side arm and its semicircular recess is provided with a reinforcing deformation.

### Brief Description of the Drawings

One embodiment of clip in accordance with the invention is shown by way of example only, in the accompanying drawings, in which:

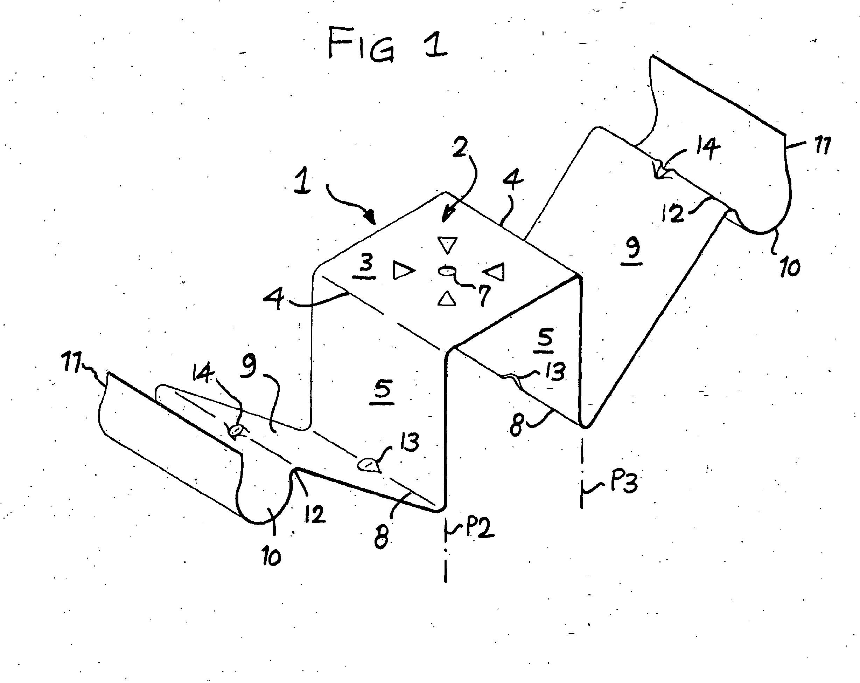

Figure 1 is a perspective view of a clip.

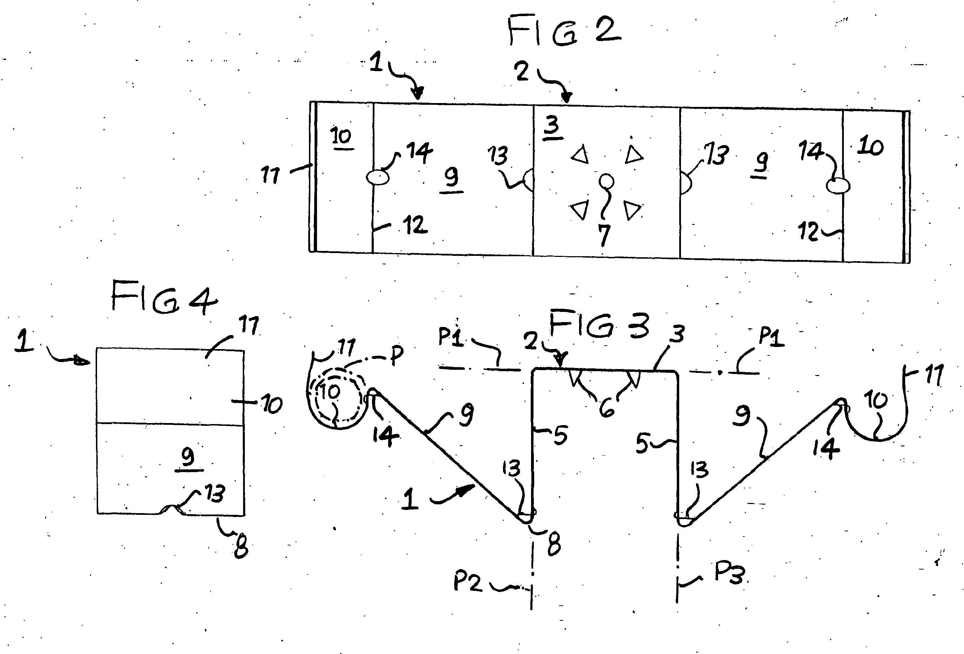

Figure 2 is a plan view of Figure 1;
Figure 3 is a side elevation of Figure 1; and
Figure 4 is an end elevation of Figure 1.

### Detailed Description of the Drawing

A one-piece clip 1 which is stamped and/or pressed from steel strip, comprises a central saddle 2 of inverted square "U"-shape comprising a base 3 with bends 4 into a pair of parallel, spaced-apart side arms 5 which extend at 90°, or thereabouts, to plane P1 of the base 3. The saddle 2 is of width such that the saddle will clip onto an upper edge of industry-standard joists, usually after cladding the upper edge with a thermally insulating membrane (not shown). A plurality of clips 1 are fitted at suitably spaced locations along each joist, as taught in GB 2370049.

The base 3 of the clip 1 is rectangular and from the metal of the base are punched or pressed out four pointed tabs 6 which project downwardly from the plane P1 of the base and are intended to penetrate the timber of the joist, and any interposed insulating membrane. Between the tabs 6 a through hole 7 is provided should the fitter additionally wish to secure the clip 1 to a joist by a nail.

The clip 1 includes further bends 8 at terminal ends of the sidearms 5 of the saddle 2 of each clip 1 from each of which bends 8 a pair of support arms 9 project at approximately 45° to plane P2 and P3 of each sidearm 5. Each support arm 9 is provided at a terminal end distal from the saddle 2 with semicircular recess10 adapted to support a portion of a circular section central heating pipe P, whilst each recess 10 has an outer, tangential extension 11, each recess 10 being connected to its support arm 9 at a bend 12. The bends 8 are provided with at least one reinforcing deformation 13, whilst the bends 12 are provided with at least one reinforcing deformation 14. After fitting the piping, the room would be completed by the fitting of floor boarding and skirting.

## Claims

1. A flooring clip comprising a saddle of inverted square "U"-shape comprising a base and a pair of spaced-apart side arms provided at a central part of the clip; integral support arms extending from opposite sidles of terminal ends of the side arms; and each support arm, at a terminal end distal from the saddle, being provided with a concave semicircular recess, the saddle (2) having an open lower end whereby, in use, the saddle (2) may embrace, seat and clip onto a portion of an upper edge of an industry-standard joist, **characterised in that**,
(i) the clip (1) is of metal; and
(ii) the integral support arms (9) are inclined upwardly whereby, in use, a portion of central heating, or other, circular section pipe (P) of corresponding circularity is received in the recess (10) and is located in close proximity to a plane (P1) including the base (3) of the clip (1).

2. A clip as claimed in Claim 1, **characterised in that** the clip (1) is produced as a one-piece stamping and/or pressing from sheet metal or from metal strip, such as galvanised mild steel.

3. A clip as claimed in any preceding claim, **characterised in that** each support arm (9) is connected to the terminal end of a side arm (5) by a bend (8) and extends at approximately 45° to the plane (P2, P3) of the side arm (5).

4. A clip as claimed in any preceding claim, **characterised in that** the base (3) of the clip (1) is provided with at least one downwardly directed tab (6) punched out from the metal of the base (3).

5. A clip as claimed in any preceding claim, **characterised in that** the base (3) is provided with a through hole (7) to receive a securing nail.

6. A clip as claimed in any preceding, claim, **characterised in that** the circularity of each recess (10) with respect to the external diameter of the plastics piping (P) to be received therein is such that in use the piping (P) is a push-fit and is effectively clipped in place by the recess, by slight deformation of the piping (P) and/or by resilience of the recess (10).

7. A clip as claimed in any preceding claim, **characterised in that** each recess (10) has on outer, tangential extension (11) adapted to extend to, or slightly above, the upper outer surface of the received piping (P).

8. A clip as claimed in any preceding claim, **characterised in that** a bend (8) in the metal between the terminal end of each side arm (5) from its support arm (9) is provided with a reinforcing deformation (13).

9. A clip as claimed in any preceding claim, **characterised in that** a bend (12) in the metal between the terminal end of each side arm (9) and its semicircular recess (10) is provided with a reinforcing deformation (14).

## Patentansprüche

1. Fußbodenclip, der einen Sattel in einer umgedrehten rechtwinkligen "U"-Form umfasst, der eine Basis und ein Paar von voneinander beabstandeten Seitenarmen umfasst, welche an einem mittleren Teil des Clips vorgesehen sind; wobei sich einstückige Tragarme von gegenüberliegenden Seiten von Anschlussenden der Seitenarme weg erstrecken; und wobei jeder Tragarm an einem distal zum Sattel gelegenen Anschlussende mit einer konkaven halbkreisförmigen Aussparung ausgestattet ist, wobei der Sattel (2) ein offenes unteres Ende aufweist, wobei der Sattel (2) bei der Verwendung einen Abschnitt einer oberen Kante eines dem Industriestandard entsprechenden Querbalkens umfassen, lagern und daran befestigt werden kann, und **dadurch gekennzeichnet, dass**
(i) der Clip (1) aus Metall ist;
(ii) die einstückigen Tragarme (9) nach oben geneigt sind, wobei bei der Verwendung ein Abschnitt einer Zentralheizungs- oder anderen Rohrleitung (P) mit Kreisquerschnitt von einer entsprechenden Kreisform in der Aussparung (10) aufgenommen wird und in unmittelbarer Nähe einer Ebene (P1) angeordnet ist, welche die Basis (3) des Clips (1) umfasst.

2. Clip gemäß Anspruch 1, **dadurch gekennzeichnet, dass** der Clip (1) als einstückiges Stanzteil und/oder Pressteil aus Blech oder aus Metallstreifen wie verzinktem Weichstahl hergestellt wird.

3. Clip gemäß einem vorangehenden Anspruch, **dadurch gekennzeichnet, dass** jeder Tragarm (9) mit dem Anschlussende eines Seitenarms (5) über eine Biegung (8) verbunden ist und sich mit ungefähr 45° zu der Ebene (P2, P3) des Seitenarms (5) erstreckt.

4. Clip gemäß einem vorangehenden Anspruch, **dadurch gekennzeichnet, dass** die Basis (3) des Clips (1) mit mindestens einem nach unten gerichteten Dorn (6) ausgestattet ist, der aus dem Metall der Basis (3) ausgestanzt ist.

5. Clip gemäß einem vorangehenden Anspruch, **dadurch gekennzeichnet, dass** die Basis (3) mit einem Durchgangsloch (7) zur Aufnahme eines Befestigungsnagels ausgestattet ist.

6. Clip gemäß einem vorangehenden Anspruch, **dadurch gekennzeichnet, dass** die Kreisform jeder Aussparung (10) in Bezug auf den Außendurchmesser der Kunststoffrohrleitung (P) zur Aufnahme darin so ist, dass die Rohrleitung (P) bei der Verwendung eine Schiebepassung aufweist und durch eine leichte Verformung der Rohrleitung (P) und/oder durch die Nachgiebigkeit der Aussparung (10) effektiv über die Aussparung an der Stelle befestigt wird.

7. Clip gemäß einem vorangehenden Anspruch, **dadurch gekennzeichnet, dass** jede Aussparung (10) eine äußere, tangentiale Verlängerung (11) aufweist, welche angepasst ist, um sich zu oder etwas über der oberen Außenfläche der aufgenommenen Rohrleitung (P) zu erstrecken.

8. Clip gemäß einem vorangehenden Anspruch, **dadurch gekennzeichnet, dass** eine Biegung (8) in dem Metall zwischen dem Anschlussende jedes Seitenarms (5) von dessen Tragarm (9) eine verstärkende Verformung (13) aufweist.

9. Clip gemäß einem vorangehenden Anspruch, **dadurch gekennzeichnet, dass** eine Biegung (12) in dem Metall zwischen dem Anschlussende jedes Seitenarms (9) und dessen halbkreisförmiger Aussparung (10) eine verstärkende Verformung (14) aufweist.

## Revendications

1. Agrafe pour revêtement de sol comprenant une sellette en forme de "U" carrée inversée comprenant une base et une paire de bras latéraux distanciés prévus dans une partie centrale de l'agrafe ; des bras de support intégrés s'étirant à partir de côtés opposés d'extrémités des bras latéraux ; et chaque bras de support, à une extrémité distale par rapport à la sellette, étant muni d'un renfoncement concave semi-circulaire, la sellette (2) possédant une extrémité inférieure ouverte au moyen de laquelle, pendant l'utilisation, cette même sellette (2) peut entourer le siège et l'agrafe sur une partie d'un bord supérieur d'une poutrelle conventionnelle, **caractérisée en ce que**
(i) l'agrafe (1) est en métal ; et
(ii) les bras de support intégrés (9) sont inclinés vers le haut grâce à quoi, pendant l'utilisation, une partie d'un tuyau à section circulaire (P) de chauffage central, ou autre, de circularité correspondante est reçue dans le renfoncement (10) et est située à proximité immédiate d'un plan (P1) incluant la base (3) de l'agrafe (1).

2. Agrafe selon la Revendication 1, **caractérisée en ce que** cette même agrafe (1) est produite comme estampage et/ou pièce forgée par pression en une seule pièce à partir d'une tôle ou d'un feuillard, comme de l'acier doux galvanisé.

3. Agrafe selon une quelconque revendication précédente, **caractérisée en ce que** chaque bras de support (9) est relié à l'extrémité d'un bras latéral (5) par un coude (8) et s'étire à approximativement 45° par rapport au plan (P2, P3) du bras latéral (5).

4. Agrafe selon une quelconque revendication précédente, **caractérisée en ce que** la base (3) de l'agrafe (1) est munie d'au moins une languette (6) orientée vers le bas, découpée à partir du métal de la base (3).

5. Agrafe selon une quelconque revendication précédente, **caractérisée en ce que** la base (3) est munie d'un trou passant (7) afin de recevoir un clou de fixation.

6. Agrafe selon une quelconque revendication précédente, **caractérisée en ce que** la circularité de chaque renfoncement (10) par rapport au diamètre externe de la canalisation en plastique (P) devant y être reçue est telle que, pendant l'utilisation, la canalisation (P) est à ajustage correct et est en fait fixée en place par le renfoncement, par une légère déformation de la canalisation (P) et/ou par l'élasticité du renfoncement (10).

7. Agrafe selon une quelconque revendication précédente, **caractérisée en ce que** chaque renfoncement (10) possède une extension externe tangentielle (11), adaptée pour s'étirer en direction, ou légèrement au-dessus, de la surface externe supérieure de la conduite reçue (P).

8. Agrafe selon une quelconque revendication précédente, **caractérisée en ce qu'**un coude (8) dans le métal entre l'extrémité de chaque bras latéral (5) à partir de son bras de support (9) est muni d'une déformation de renforcement (13).

9. Agrafe selon une quelconque revendication précédente, **caractérisée en ce qu'**un coude (12) dans le métal entre l'extrémité de chaque bras latéral (9) et son renfoncement semi-circulaire (10) est muni d'une déformation de renforcement (14).
